# EUROPEAN PATENT SPECIFICATION

(11) **EP 3 965 967 B1**
(45) Date of publication and mention of the grant of the patent: **13.03.2024**
(21) Application number: 20731204.2
(22) Date of filing: 06.05.2020
(51) Int. Cl.: B09C 1/02, B09C 1/08, C10G 1/04, C10G 21/14, C10G 33/02, C11D 1/22, C11D 1/66, C11D 1/74, C11D 1/83, C09K 8/584, C11D 1/72, C10G 1/00

(54) **METHOD FOR REMOVING AND RECOVERING HYDROCARBONS FROM A SOLID PHASE**
VERFAHREN ZUR ENTFERNUNG UND RÜCKGEWINNUNG VON KOHLENWASSERSTOFFEN AUS EINER FESTEN PHASE
PROCÉDÉ D'ÉLIMINATION ET DE RÉCUPÉRATION D'HYDROCARBURES D'UNE PHASE SOLIDE

(30) Priority: 06.05.2019 IT 201900006569; 18.07.2019 IT 201900012309
(43) Date of publication of application: 16.03.2022
(73) Proprietor: Soil Remediation G.P.T. Sagl, 6900 Lugano (CH)
(72) Inventor: GUSLANDI, Gian Furio, 10131 Torino (IT); TIRRITO, Luigi, El-Biar (Alger) 16606 (DZ)
(74) Representative: Garavelli, Paolo
(86) International application number: PCT/IB2020/054294
(87) International publication number: WO 2020/225751

(56) References cited:
- CN-A- 107 639 108
- US-A- 5 561 106
- US-A1- 2017 029 710

## Description

### CROSS-REFERENCE TO RELATED APPLICATIONS

This patent application claims priority from Italian patent application no. 102019000006569 filed on 6/05/2019 and Italian patent application no. 102019000012309 filed on 18/07/2019.

### TECHNICAL FIELD

The present invention concerns a method for removing hydrocarbons from a solid phase, in particular from contaminated soil, and the recovery thereof.

### BACKGROUND ART

The extraction, handling and transport of hydrocarbons often cause contamination of the surface soil where said activities are carried out due to spillages. The concentration of hydrocarbons in this soil or sand can reach very high values, up to hundreds of kilograms per cubic metre of soil, thus requiring remediation in order to restore the soil and bring its parameters back within the limits established by national law. Furthermore, the large quantity of hydrocarbons present in the contaminated soil represents a considerable source of contamination and, at times, also a loss of significant resources.

Various methods are currently known for removing hydrocarbons from soil and sand.

One of these methods entails incineration and desorption in situ. This technique for the remediation of soil and sand involves raising the temperature of the soil until bringing the hydrocarbons to controlled combustion or their transformation into gas. However, this technique does not allow control of the final hydrocarbon concentrations and entails a high environmental cost due to a significant emission of contaminants into the atmosphere during the process and loss of the hydrocarbons.

Another known method is solidification /stabilization/encapsulation. This technique entails the production of a solid mass, which has a sufficiently high structural integrity to allow transport and/or disposal without the need for secondary containment and minimizing dispersion of the contaminants. Stabilization entails the immobilization of hydrocarbons, heavy metals and other constituents of the soil by chemical alteration with a hydraulic binder (for example silicates) to form insoluble compounds or by incorporation in the solidified soil by, for example, covering with concrete. The dry material thus obtained has acceptable parameters for land burial in situ or disposal in an approved facility. This technique uses a large quantity of compounds for stabilization and solidification and makes it impossible to recover the hydrocarbons. Furthermore, in the long term there is the risk of cracking with consequent percolation of the hydrocarbons.

Thermal desorption is the technique most widely used in Algeria, since it allows partial recovery of the hydrocarbons. It entails excavation of the soil or sand, transport of it off site, where it undergoes a thermal process ranging from 250 to 500 degrees centigrade to carry out desorption of the organic part (hydrocarbons) in the form of gas from the inorganic part (soil and sand matrix). The gas hydrocarbons are subsequently purified of dust and other substances, recondensed, and partly recovered. This technique has a high cost due to the transport of large quantities of soil. Furthermore, gases and dust are produced which have to be treated prior to re-introduction into the environment. Also this process is characterized by a significant emission of contaminants into the atmosphere.

Other systems include excavation and washing ex situ of the soil or sand containing the hydrocarbons, a technique that removes the hydrocarbons and other substances from the soil by washing it with a liquid (often with a chemical additive), and then separating the clean soil from the contaminated soil and washing water, a technique that uses large volumes of water and does not allow recovery of the hydrocarbons.

US-A1-2017/029710, CN-A-107 639 108 and US-A-5 561 106 disclose prior art methods for removing hydrocarbons from a solid phase.

The need is therefore felt in the art for a new method for removing hydrocarbons from a solid surface, in particular contaminated soil, which is without the drawbacks of the known methods.

### DISCLOSURE OF INVENTION

The object of the present invention is therefore to provide a method which is able to remove large quantities of hydrocarbons and allows minimization of the quantity of non-recoverable soil, recycling of the water used, recovery of the hydrocarbons removed and a considerable reduction in costs.

The object of the present invention is achieved by a method for removing and recovering hydrocarbons according to claim 1.

In particular, a method is provided for removing hydrocarbons from a solid phase and the recovery thereof comprising the steps of:
a) washing the solid phase contaminated with hydrocarbons by means of a composition comprising at least a surfactant so as to obtain a clean solid surface and a hydrocarbon-rich aqueous solution;
b) separating the hydrocarbon-rich aqueous solution from the clean solid phase;
c) treating the hydrocarbon-rich aqueous solution by means of electrocoagulation/electroflotation to recover the hydrocarbons.

According to a first embodiment, the composition can comprise:
- 10 to 20% by weight, based on the total weight of the composition, of an alkylpolyglucoside with an alkyl chain having average length ranging from 6 to 14 carbon atoms;
- 2 to 10% by weight, based on the total weight of the composition, of a non-ionic surfactant comprising a triglyceride alkoxylated with ethylene oxide and/or propylene oxide and esterified at least partially with a fatty acid with an alkyl chain having 6 to 22 carbon atoms;
- 0.5 to 6% by weight, based on the total weight of the composition, of an alkylbenzenesulfonate; and water.

In one embodiment, the alkylpolyglucoside is selected from alkylpolyglucosides with an alkyl chain having average length ranging from 10 to 12 carbon atoms such as, for example GLUCOPON GD70. Preferably, the alkylpolyglucoside is present in a quantity ranging from 17 to 19% by weight, based on the total weight of the composition.

The surfactant comprising an alkoxylated triglyceride is a product obtained by alkoxylation of triglycerides, esterified wholly or partly with fatty acids having 6-22 carbon atoms in which 2 to 40 moles of alkoxylating agent per mole of triglyceride are used. Castor oil and/or castor oil dehydrated with ethylene oxide, partially esterified with oleic acid, such as MARLOWET LVS, are preferably used.

Preferably, said compounds are present in a quantity ranging from 5 to 7% by weight, based on the total weight of the composition.

The alkylbenzenesulfonate is preferably linear and is even more preferably sodium dodecylbenzenesulfonate, for example MARLON A350.

In an alternative embodiment, the composition can comprise:
- 20 to 35% by weight, based on the total weight of the composition, of an anionic surfactant selected from the group consisting of alkoxylated fatty acid sulfates and alkoxylated fatty acid ether sulfates;
- 0.5 to 8% by weight, based on the total weight of the composition, of an alkoxylated alcohol;
- 0.5 to 8% by weight, based on the total weight of the composition, of a propoxylated ethoxylated alcohol; and water.

In one embodiment, the alkoxylated fatty acid sulfates and the alkoxylated fatty acid ether sulfates are selected from compounds obtained from fatty acids having 8 and 20 carbon atoms, preferably 10-16 carbon atoms, alkoxylated or non-alkoxylated, preferably ethoxylated with 1-5 moles of ethylene oxide. Even more preferably the anionic surfactant is sodium lauryl ethersulfate.

Preferably, said compounds are present in a quantity ranging from 25 to 30% by weight, based on the total weight of the composition.

In one embodiment, the alkoxylated alcohol is an alcohol having 8 to 20 carbon atoms, preferably 9 to 11, and alkoxylated with 1-8 moles of ethylene oxide.

In one embodiment, the propoxylated ethoxylated alcohol is an alcohol having 8 to 20 carbon atoms, preferably 10 to 16.

The composition of the invention can further comprise an organic solvent, a chelating agent and a suspending agent.

The organic solvent, when present, is present in a quantity of up to 5% by weight, based on the total weight of the composition, and is preferably selected from the group consisting of isopropanol and ethanol.

The chelating agent, for example glutamic acid tetrasodium salt, N,N diacetic acid, is present in a quantity up to 1% by weight, based on the total weight of the composition.

The suspending agent, preferably a silicate, more preferably sodium metasilicate, is present up to 3% by weight, based on the total weight of the composition.

### BRIEF DESCRIPTION OF THE DRAWING

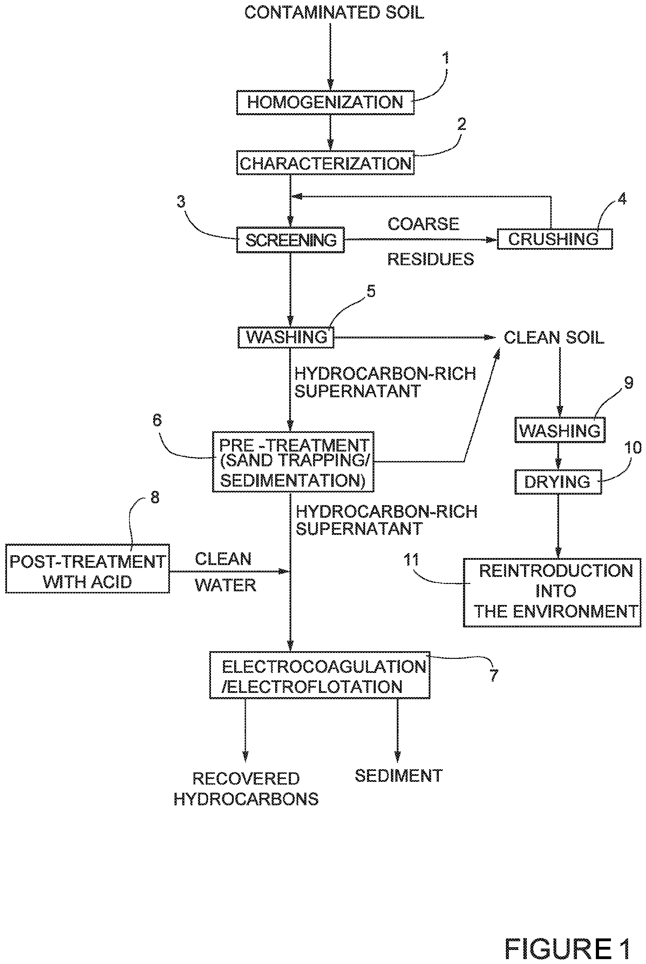

The method for removal of the hydrocarbons from a solid phase and the recovery thereof according to the present invention will now be described in detail with reference to the figures of the attached drawings, which show purely illustrative and non-limiting embodiment examples, in which Figure 1 illustrates a schematic representation of an embodiment of the method of the present invention.

Advantageously, the method of the invention allows the recovery of hydrocarbons with alkyl chains containing mainly 5 to 40 carbon atoms, but also hydrocarbons with longer chain from soil contaminated also by bentonites and polymers.

### BEST MODE FOR CARRYING OUT THE INVENTION

The method shown in Figure 1 refers to the process for removing hydrocarbons from contaminated soil, for example sand, taken near plants for the extraction and refinement of hydrocarbons or along hydrocarbon distribution and transport lines.

Before being processed to remove the hydrocarbons, the soil taken from the extraction site can be mechanically mixed, if necessary, so as to obtain a uniform product (step 1).

The sample can be further analysed to obtain a characterization thereof so as to optimize the process parameters for removal of the hydrocarbons (step 2). Optionally, the sample is screened (step 3). The fragments with larger dimensions than those of the screen meshes are furthermore crushed so as to increase the surface area of the soil sample to be treated (step 4). The crushed sample is resent to the screening step.

At this point, the pre-treated soil sample undergoes the process for removal of the hydrocarbons according to the invention.

In particular, the contaminated soil is mixed in a tank with water and a solution comprising:
- 10 to 20% by weight, based on the total weight of the composition, of an alkylpolyglucoside with an alkyl chain having average length between 6 and 14 carbon atoms;
- 2 to 10% by weight, based on the total weight of the composition, of a surfactant comprising a triglyceride alkoxylated with ethylene oxide and/or propylene oxide and esterified at least partially with a fatty acid with alkyl chain having 6 to 22 carbon atoms;
- 0.5 to 6% by weight, based on the total weight of the composition, of an alkylbenzenesulfonate; and water.

For example, the composition consists of the following:

**Table 1**

| Quantity (% by weight, based on the total weight of the composition) | Trade name/ Category | Function |
|---|---|---|
| 0.50 | Sodium metasilicate (silicate) | Suspending agent |
| 0.01 | Dissolvine FL38 (Glutamic acid, diacetic acid, tetrasodium salt) | Chelating agent |
| 18 | Glucopon GD70 (alkylpolyglucoside) | Non-ionic surfactant |
| 6 | Marlowet LVS (Polyethoxylated castor oil esters) | Non-ionic surfactant |
| 2 | Marlon A350 (Sodium dodecylbenzenesulfonate ) | |
| 3 | Isopropanol | Solvent |
| 70.49 | Water | Solvent |

For every cubic metre of soil treated, approximately 1.4 cubic metres of water and 7 to 13 litres of the composition of table 1 are added.

The mixture thus obtained is mechanically agitated to facilitate washing (step 5) of the soil and passage of the hydrocarbons to the aqueous phase to form a suspension. Preferably, said process is carried out using water at a temperature ranging from 30 to 60°C, more preferably at a temperature of 45°C.

The solid phase consisting of the clean soil is then left to sediment and the supernatant, consisting of a hydrocarbon-rich aqueous suspension, is collected.

The results obtained with the composition of table 1 subjecting a soil sample to the washing step only (step 5) are reported in table 2.

**Table 2**

| Sample | Hydrocarbon concentration | Removal percentage |
|---|---|---|
| Sample 1 before washing | 5516 ppm | |
| Sample 1 after washing | 1500 ppm | 72.8% |
| Sample 2 before washing | 9000 ppm | |
| Sample 2 after washing | 3500 ppm | 62.4% |
| Sample 3 before washing | 3600 ppm | |
| Sample 3 after washing | 802 ppm | 77.7% |

The clean soil can therefore be washed with water (step 9) and dried (step 10) before reintroduction into the environment (step 11).

The supernatant of step 5 composed of the hydrocarbon-rich aqueous suspension is then treated to separate and recover the hydrocarbons and the water for possible re-use thereof.

In particular, the supernatant of step 5 is treated by means of electrocoagulation/electroflotation (step 7) so as to eliminate the solids still present in suspension and to separate the water and the hydrocarbons. Before said step 7, the supernatant of step 5 can be optionally pre-treated by allowing the solid phase contained in it, consisting of clean soil, to further sediment; said soil is then recovered and reintroduced into the environment.

Electrocoagulation/electroflotation is a technique that allows the separation of a hydrocarbon suspended in an aqueous solution by the application of an electric current. The application of an electric current by means of electrodes immersed in the suspension generates, by electrolytic oxidation of the anode, ions which act as a coagulant.

In particular, in the case of an anode made of aluminium, the following reactions occur when the electric current is applied:

Al(0) -> Al³⁺ + 3e⁻

H₂O + 2e⁻ -> 2OH⁻ + H₂ (gas)

Al³⁺ + 3OH⁻ -> Al(OH)₃ (solid)

In this case, the gaseous hydrogen that develops facilitates flotation of the hydrocarbons towards the surface of the suspension. The aluminium hydroxide, on the other hand, precipitates and, if necessary, with the aid of a flocculating polymer such as polyacrylamide or polydiallyldimethylammonium chloride (PDADMAC), facilitates precipitation of the suspended solids.

Preferably, step 7 of electrocoagulation /electroflotation is conducted at a slightly basic pH, for example 7.5, obtained by the addition of a base, for example sodium or calcium hydroxide.

The end of step 7 results in re-usable hydrocarbons, a sediment and water that can be re-used, by means of recirculation, both in the process of the invention, for example in step 5 of washing the contaminated soil or in step 9 of washing the clean soil, and, for example, for agricultural use.

Optionally, it is possible to treat the water, prior to re-introduction into the environment, with an acid (step 8), for example hydrochloric acid or sulphuric acid, to neutralize the pH after addition of the base in the electrocoagulation step 7.

In terms of yield, for each cubic metre of contaminated soil treated, with an initial water consumption of 1.4 m³, the method of the invention allows 0.9 m³ of clean soil and 0.8 m³ of re-usable water to be recovered. 60 to 80% of hydrocarbons present in the contaminated soil are also recovered.

In one alternative embodiment, after screening, the contaminated soil is mixed in a tank with water and a solution comprising:
- 20 to 35% by weight, based on the total weight of the composition, of an anionic surfactant selected from the group consisting of alkoxylated fatty acid sulfates and alkoxylated fatty acid ether sulfates;
- 0.5 to 8% by weight, based on the total weight of the composition, of an alkoxylated alcohol;
- 0.5 to 8% by weight, based on the total weight of the composition, of a propoxylated ethoxylated alcohol; and water.

For example, the composition consists of the following (table 3) :

**Table 3**

| Quantity (% by weight, based on the total weight of the composition) | Trade name/ Category | Function |
|---|---|---|
| 25 | Lauryl ethersulfate | Anionic surfactant |
| 3 | C9-11 ethoxylated alcohol (4 moles ethylene oxide) | Surfactant |
| 2 | C10-16 propoxylated ethoxylated alcohol | Surfactant |
| 70 | Water | |

For each cubic metre of soil treated, approximately 1.4 cubic metres of water and 5 to 13 litres of the composition of table 3 are added.

The mixture thus obtained is treated as described above.

The results obtained by subjecting a soil sample to the washing step only (step 5) are shown in table 4.

**Table 4**

| Sample | Hydrocarbon concentration | Removal percentage |
|---|---|---|
| Sample 1 before washing | 15520 ppm | |
| Sample 1 after washing | 1023 ppm | 93.4% |
| Sample 2 before washing | 9000 ppm | |
| Sample 2 after washing | 750 ppm | 91.7% |
| Sample 3 before washing | 13600 ppm | |
| Sample 3 after washing | 880 ppm | 93.5% |

The clean soil can therefore be washed with water (step 9) and dried (step 10) before being reintroduced into the environment (step 11).

The supernatant of step 5 consisting of the hydrocarbon-rich aqueous suspension can then be treated to separate and recover the hydrocarbons and the water for possible re-use by means of electrocoagulation/electroflotation (step 7) as described above.

The yields are as follows: for each cubic metre of contaminated soil treated, with an initial water consumption of 1.4 m³, the method of the invention allows the recovery of approximately 0.95 m³ of clean soil and 1.25 m³ of re-usable water. 80 to 90% of hydrocarbons present in the contaminated soil are also recovered.

Advantageously, therefore, the method for removing and recycling hydrocarbons and process water according to the invention allows rapid remediation of the soil directly in situ, entails low water consumption (85 to 95% of the water initially used for the process is recovered) and a high productivity, and does not involve the production of toxic gases.

## Claims

1. A method for removing hydrocarbons from a solid phase and recovery thereof comprising the steps of:
a) washing (5) the solid phase contaminated with hydrocarbons by means of a composition comprising at least a surfactant so as to obtain a clean solid surface and a hydrocarbon-rich aqueous solution;
b) separating the hydrocarbon-rich aqueous solution from the clean solid phase;
c) treating the hydrocarbon-rich aqueous solution to recover the hydrocarbons,
**characterized in that** the hydrocarbon-rich aqueous solution is treated by means of electrocoagulation/electroflotation (7).

2. The method according to claim 1, **characterized in that** it comprises, after step b), a step c1) of separating the hydrocarbon-rich aqueous solution from the solid phase contained in it.

3. The method according to claim 1 or 2, **characterized in that** said solid phase is a soil contaminated by hydrocarbons.

4. The method according to any one of the claims from 1 to 3, **characterized in that** said surfactant is selected from the group of anionic surfactants and non-ionic surfactants.

5. The method according to any one of the claims from 1 to 4, **characterized in that** said composition comprises:
- 10 to 20% by weight, based on the total weight of the composition, of an alkylpolyglucoside with an alkyl chain having average length between 6 and 14 carbon atoms;
- 2 to 10% by weight, based on the total weight of the composition, of a non-ionic surfactant comprising a triglyceride alkoxylated with ethylene oxide and/or propylene oxide and esterified at least partially with a fatty acid with an alkyl chain having 6 to 22 carbon atoms;
- 0.5 to 6% by weight, based on the total weight of the composition, of an alkylbenzenesulfonate; and water.

6. The method according to any one of the claims from 1 to 4, **characterized in that** said composition comprises:
- 20 to 35% by weight, based on the total weight of the composition, of an anionic surfactant selected from the group consisting of alkoxylated fatty acid sulfates and alkoxylated fatty acid ether sulfates;
- 0.5 to 8% by weight, based on the total weight of the composition, of an alkoxylated alcohol;
- 0.5 to 8% by weight, based on the total weight of the composition, of a propoxylated ethoxylated alcohol; and water.

7. The method according to claim 5 or 6, **characterized in that** said composition further comprises up to 1% by weight, based on the total weight of the composition, of a chelating agent.

8. The method according to claim 5 or 6, **characterized in that** said composition further comprises up to 5% by weight, based on the total weight of the composition, of an organic solvent.

9. The method according to claim 8, **characterized in that** said organic solvent is selected from the group consisting of isopropanol and ethanol.

10. The method according to claim 5 or 6, **characterized in that** said composition further comprises up to 3% by weight, based on the total weight of the composition, of a suspending agent.

## Patentansprüche

1. - Verfahren zur Entfernung von Kohlenwasserstoffen aus einer festen Phase und deren Rückgewinnung, umfassend die Schritte:
a) Waschen (5) der mit Kohlenwasserstoffen verunreinigten festen Phase unter Verwendung einer Zusammensetzung, die mindestens ein Tensid umfasst, um eine saubere feste Oberfläche und eine an Kohlenwasserstoffen reiche wässrige Lösung zu erhalten;
b) die an Kohlenwasserstoffen reiche wässrige Lösung von der sauberen festen Phase trennen; und
c) Behandeln der kohlenwasserstoffreichen wässrigen Lösung, um die Kohlenwasserstoffe zurückzugewinnen,
**dadurch gekennzeichnet, dass** die kohlenwasserstoffreiche wässrige Lösung durch Elektrokoagulation/Elektroflotation behandelt wird (7).

2. - Verfahren nach Anspruch 1, **dadurch gekennzeichnet, dass** es nach Phase b) eine Phase c1) der Trennung der wässrigen Lösung, die reich an Kohlenwasserstoffen ist, von der darin enthaltenen festen Phase umfasst.

3. - Verfahren nach Anspruch 1 oder 2, **dadurch gekennzeichnet, dass** die feste Phase ein mit Kohlenwasserstoffen kontaminierter Boden ist.

4. - Verfahren nach einem der Ansprüche 1 bis 3, **dadurch gekennzeichnet, dass** das Tensid aus der Gruppe der anionischen Tenside und nichtionischen Tenside ausgewählt wird.

5. - Verfahren nach einem der Ansprüche 1 bis 4, **dadurch gekennzeichnet, dass** die Zusammensetzung Folgendes umfasst:
- 10 bis 20 Gew.-%, bezogen auf das Gesamtgewicht der Zusammensetzung, eines Alkylpolyglucosids mit einer Alkylkette mit einer durchschnittlichen Länge von 6 bis 14 Kohlenstoffatomen;
- 2 bis 10 Gew.-%, bezogen auf das Gesamtgewicht der Zusammensetzung, eines nichtionischen Tensids, das ein mit Ethylenoxid und/oder Propylenoxid alkoxyliertes und zumindest teilweise mit einer Fettsäure mit Alkylkette verestertes Triglycerid umfasst mit 6 bis 22 Kohlenstoffatomen;
- 0,5 bis 6 Gew.-%, bezogen auf das Gesamtgewicht der Zusammensetzung, eines Alkylbenzolsulfonats; und Wasser.

6. - Verfahren nach einem der Ansprüche 1 bis 4, **dadurch gekennzeichnet, dass** die Zusammensetzung Folgendes umfasst:
- 20 bis 35 Gew.-%, bezogen auf das Gesamtgewicht der Zusammensetzung, eines anionischen Tensids, ausgewählt aus der Gruppe bestehend aus Sulfaten alkoxylierter Fettsäuren und sulfatierten Ethern alkoxylierter Fettsäuren;
- 0,5 bis 8 Gew.-%, bezogen auf das Gesamtgewicht der Zusammensetzung, eines alkoxylierten Alkohols;
- 0,5 bis 8 Gew.-%, bezogen auf das Gesamtgewicht der Zusammensetzung, eines propoxylierten ethoxylierten Alkohols; und Wasser.

7. - Verfahren nach Anspruch 5 oder 6, **dadurch gekennzeichnet, dass** die Zusammensetzung außerdem bis zu 1 Gew.-%, bezogen auf das Gesamtgewicht der Zusammensetzung, eines Chelators enthält.

8. - Verfahren nach Anspruch 5 oder 6, **dadurch gekennzeichnet, dass** die Zusammensetzung außerdem bis zu 5 Gew.-%, bezogen auf das Gesamtgewicht der Zusammensetzung, eines organischen Lösungsmittels enthält.

9. - Verfahren nach Anspruch 8, **dadurch gekennzeichnet, dass** das organische Lösungsmittel aus der Gruppe bestehend aus Isopropanol und Ethanol ausgewählt wird.

10. - Verfahren nach Anspruch 5 oder 6, **dadurch gekennzeichnet, dass** die Zusammensetzung außerdem bis zu 3 Gew.-% des Gesamtgewichts der Zusammensetzung eines Suspensionsmittels enthält.

## Revendications

1. - Procédé d'élimination des hydrocarbures d'une phase solide et leur récupération comprenant les étapes de:
a) laver (5) la phase solide contaminée par des hydrocarbures à l'aide d'une composition comprenant au moins un tensioactif de manière à obtenir une surface solide propre et une solution aqueuse riche en hydrocarbures;
b) séparer la solution aqueuse riche en hydrocarbures de la phase solide propre; et
c) traiter la solution aqueuse riche en hydrocarbures pour récupérer les hydrocarbures,
**caractérisé par le fait que** la solution aqueuse riche en hydrocarbures est traitée par électrocoagulation/électroflottation (7).

2. - Procédé selon la revendication 1, **caractérisé en ce qu'**il comprend, après la phase b), une phase c1) de séparation de la solution aqueuse riche en hydrocarbures de la phase solide qu'elle contient.

3. - Procédé selon la revendication 1 ou 2, **caractérisé en ce que** ladite phase solide est un sol contaminé par des hydrocarbures.

4. - Procédé selon l'une quelconque des revendications 1 à 3, **caractérisé en ce que** ledit tensioactif est choisi dans le groupe des tensioactifs anioniques et des tensioactifs non ioniques.

5. - Procédé selon l'une quelconque des revendications 1 à 4, **caractérisé en ce que** ladite composition comprend:
- de 10 à 20 % en poids, par rapport au poids total de la composition, d'un alkyl polyglucoside à chaîne alkyle ayant une longueur moyenne variant de 6 à 14 atomes de carbone;
- de 2 à 10 % en poids, par rapport au poids total de la composition, d'un tensioactif non ionique comprenant un triglycéride alcoxylé par l'oxyde d'éthylène et/ou l'oxyde de propylène et estérasé au moins en partie par un acide gras à chaîne alkyle ayant 6 à 22 atomes de carbone;
- de 0,5 à 6 % en poids, par rapport au poids total de la composition, d'un alkylbenzènesulfonate ; et de l'eau.

6. - Procédé selon l'une quelconque des revendications 1 à 4, **caractérisé en ce que** ladite composition comprend:
- de 20 à 35 % en poids, par rapport au poids total de la composition, d'un tensioactif anionique choisi dans le groupe constitué des sulfates d'acides gras alcoxylés et des éthers sulfatés d'acides gras alcoxylés;
- de 0,5 à 8 % en poids, par rapport au poids total de la composition, d'un alcool alcoxylé;
- de 0,5 à 8 % en poids, par rapport au poids total de la composition, d'un alcool éthoxylé propoxylé; et de l'eau.

7. - Procédé selon la revendication 5 ou 6, **caractérisé en ce que** ladite composition comprend en outre jusqu'à 1% en poids, par rapport au poids total de la composition, d'un chélateur.

8. - Procédé selon la revendication 5 ou 6, **caractérisé en ce que** ladite composition comprend en outre jusqu'à 5% en poids, par rapport au poids total de la composition, d'un solvant organique.

9. - Procédé selon la revendication 8, **caractérisé en ce que** ledit solvant organique est choisi dans le groupe constitué par l'isopropanol et l'éthanol.

10. - Procédé selon la revendication 5 ou 6, **caractérisé en ce que** la composition comprend en outre jusqu'à 3% en poids du poids total de la composition d'un agent de suspension.
